# EUROPÄISCHE PATENTANMELDUNG

(11) **EP 3 569 120 A1**
(43) Veröffentlichungstag der Anmeldung: **20.11.2019**
(21) Anmeldenummer: 18172121.8
(22) Anmeldetag: 14.05.2018
(51) Int. Cl.: A47J 45/10, A41D 19/015

(54) **ANFASSHILFE**

(71) Anmelder: keeeper GmbH, 32351 Stemwede (DE)
(72) Erfinder: Dumler, Alex, 20095 Hamburg (DE); Königsberger, Johanna, 20095 Hamburg (DE)
(74) Vertreter: Weeg, Thomas

(57) **Zusammenfassung**

Die vorliegende Erfindung bezieht sich auf eine Anfasshilfe (2) zur Handhabung eines heißen Gegenstands (24) mit einem eine Aufstellfläche (12) aufweisenden flächigen Grundkörper (4).

Um eine Anfasshilfe zu schaffen, mit der heiße Gegenstände wie beispielsweise ein Backblech, aber auch andere in einem Haushalt verwendete Gerätschaften wie Kochtöpfe, Bratpfannen, Fondue- und Racletttöpfe oder heiße Teller und dergleichen, sicherer und fester erfasst und abgestellt werden können, wird vorgeschlagen, dass an dem Grundkörper (4) randseitig eine Fingertasche (6) aus einem flexiblen Material ausgebildet ist, die einen oder mehrere eingesteckte Finger zumindest bereichsweise umhüllt, wenn dieser oder diese in die Fingertasche (6) eingesteckt sind.

## Beschreibung

Die vorliegende Erfindung bezieht sich auf eine Anfasshilfe zur Handhabung eines heißen Gegenstands mit einem eine Aufstellfläche aufweisenden flächigen Grundkörper.

Aus dem Stand der Technik sind Untersetzer bekannt, die dazu dienen, eine Ablagefläche wie einen Tisch oder eine Arbeitsfläche gegen Hitze aus einem darauf aufstehenden heißen Gegenstand wie einem Topf oder einem Backblech zu schützen. Die bekannten Untersetzer sind üblicherweise starre Platten. Um den heißen Gegenstand anfassen und bewegen zu können, sind auch Topflappen bekannt, die die Übertragung der Wärme aus dem heißen Gegenstand auf die Finger einer Person, die den heißen Gegenstand bewegen will, verlangsamt, so dass sich die Person nicht die Finger verbrennt, wenn sie den heißen Gegenstand hält.

Aus der Schrift DE 596 653 ist es bekannt, zum Erfassen heißer Gegenstände ein umgebogenes Blech als Greifer zu verwenden, dessen Schenkel flexibel aufeinander zu gedrückt werden können, um die heißen Gegenstände an den Rändern mit zumindest einem Haken umfassen und halten zu können. Die Finger werden unter einem Halteriemen hindurchgeschoben, das Blech schützt dann die Haut gegen die Hitze des heißen Gegenstands. Das glatte Blechmaterial ermöglicht es zwar, einen Blechschenkel leicht unter einen Topf oder ein Backblech zu schieben, wegen des unflexiblen Materials kann der heiße Gegenstand aber leicht wieder aus dem Greifer herausrutschen.

Aus der Schrift DE 10 2007 031 687 ist es bekannt, eine Isoliermatte sowohl als Untersetzer als auch als Topflappen zu verwenden. Der Grundkörper besteht dazu aus einem flexiblen Material und verfügt an seiner Ober- und Unterseite über wabenförmige Hohlkammern, die nach außen hin offen sind und isolierend wirken. Das flexible Material mit den weichen Hohlkammern macht es aber auch schwierig, einen heißen Gegenstand ausreichend sicher zu erfassen und zu umfassen. Wenn ein Abschnitt der Isoliermatte um einen heißen Gegenstand geschlagen wird, ist dieser nur schwer kontrollierbar. Auch ist es schwierig, die Isoliermatte unter den heißen Gegenstand zu schieben, um diesen erst danach zu erfassen.

Es ist die Aufgabe der vorliegenden Erfindung, eine Anfasshilfe zu schaffen, mit der heiße Gegenstände wie beispielsweise ein Backblech, aber auch andere in einem Haushalt verwendete Gerätschaften wie Kochtöpfe, Bratpfannen, Fondue- und Racletttöpfe oder heiße Teller und dergleichen, sicherer und fester erfasst und abgestellt werden können.

Die Aufgabe wird für eine gattungsgemäße Anfasshilfe gelöst, indem an dem Grundkörper randseitig eine Fingertasche aus einem flexiblen Material ausgebildet ist, die einen oder mehrere eingesteckte Finger zumindest bereichsweise umhüllt, wenn dieser oder diese in die Fingertasche eingesteckt sind.

Der Grundkörper kann weiterhin nach Art eines Untersetzers genutzt werden. Der Grundkörper hat dafür eine Größe, die ausreicht, um eine ausreichend große Grundfläche des heißen Gegenstands nach unten hin abzudecken. Der Grundkörper kann dadurch unter dem heißen Gegenstand vorgehalten werden, um den heißen Gegenstand flächig darauf abzustellen oder um ihn mit einzelnen Fingern oder einer Hand von unten her zu erfassen oder den Grundkörper unter den heißen Gegenstand zu schieben.

Die Fingertasche bildet einen Schutzraum, in den ein oder mehrere Finger eingesteckt werden können, um sie mit dem Wandmaterial der Fingertasche vor der Hitze des zu tragenden heißen Gegenstands zu schützen. Die Finger können mit dem Wandmaterial der Fingertasche direkt auf den zu tragenden heißen Gegenstand gedrückt und dort über einen längeren Zeitraum gehalten werden, um den heißen Gegenstand sicher zu halten, ohne dabei dem Risiko ausgesetzt zu sein, sich die Finger dabei zu verbrennen. Der heiße Gegenstand kann direkt mit Fingern erfasst werden, die sich in der Fingertasche befinden. Um die Anfasshilfe auch nach Art eines Topflappens zum Erfassen heißer Gegenstände nutzen zu können und damit einen heißen Gegenstand abzustützen, zu tragen und am Rand mit einem oder mehreren Fingern kontrolliert und geschützt umgreifen zu können, ist die Fingertasche randseitig am Grundkörper angeordnet. Einzelne oder mehrere Finger können dazu je nach Größe in die Fingertasche eingesteckt werden. Die Fingertasche verfügt dabei über eine geeignete Tiefe und Länge, die es erlaubt, mit einem oder mehreren Fingern einen heißen Gegenstand so zu umgreifen, dass dieser bei der Handhabung auch ausreichend sicher gehalten werden kann, ohne dass der Benutzer dabei dem Risiko ausgesetzt ist, sich dabei die Finger zu verbrennen. Ein heißer Gegenstand kann also mit der Fingertasche an einer Seite und mit dem Grundkörper an einer anderen Seite erfasst und angehoben werden.

Die Fingertasche umfasst nicht nur die Materiallage, die zwischen den oder die Finger und den heißen Gegenstand gelegt werden kann, sondern ist als eine einen Schutzraum ausbildende Hülle ausgebildet, die den oder die Finger zumindest auch seitlich und rückwärtig schützt und in der Halteposition abstützt. Durch den definierten Schutzraum der Fingertasche können der oder die Finger nicht versehentlich aus der Fingertasche herausrutschen oder unbewusst daraus herausbewegt werden. Durch die taschenartige Abstützung können die Finger auch nicht so leicht aus einer Griffposition abrutschen und einen unerwünschten direkten Kontakt zum heißen Gegenstand bekommen.

Das flexible Material erlaubt eine Anpassung zumindest der Fingertasche der Anfasshilfe an die Form des heißen Gegenstands, wenn nur die Fingertasche aus einem flexiblen Material hergestellt ist. Insbesondere die Fingertasche ist über das flexible Material beweglich und kann bei der Benutzung an die Form des heißen Gegenstands angepasst gehalten werden. Die Fingertasche kann insbesondere aus einer horizontalen Lage nach oben verschwenkt und dabei an den heißen Gegenstand angelegt oder auf diesen aufgelegt werden, um dann den heißen Gegenstand mit dem oder den in die Fingertasche eingelegten Fingern nicht nur von unten her zu tragen, sondern auch von der Seite und/oder oben her fest und hitzegeschützt halten zu können. Wahlweise kann auch der Grundkörper aus einem flexiblen Material hergestellt sein.

Es ist im Rahmen der Erfindung möglich, statt einer einzelnen Fingertasche auch mehrere Fingertaschen an einer Anfasshilfe auszubilden. So könnte beispielsweise auch je eine Fingertasche am rechten und am linken Rand einer Seite eines Grundkörpers angeordnet sein. Die beiden Fingertaschen sind dann jeweils kürzer als die halbe Breite der Seite des Grundkörpers, an der die Fingertaschen angebracht sind. Die Fingertaschen müssen nicht bündig zur Ecke des Grundkörpers enden, sondern können nach innen oder außen versetzt angeordnet sein. Auch bei mehreren Fingertaschen geht es darum, den Fingern eine sichere Aufnahme zu bieten, während sie einen heißen Gegenstand festhalten.

Nach einer Ausgestaltung der Erfindung ist die Fingertasche ist mit dem Grundkörper über ein Scharnier verbunden, durch das sich eine definierte Schwenkbewegung der Fingertasche im Verhältnis zum Grundkörper einstellt. Das Scharnier kann als eine Art Filmscharnier mit einer gegenüber dem umgebenden Material dünneren Materialdicke ausgebildet sein, wodurch die Verschwenkung der Fingertasche um das Scharnier herum erleichtert wird. Der Scharnierbereich kann sich auch dadurch auszeichnen, dass dort am übrigen Grundkörper ausgebildete Noppen und Stege oder sonstige Materialverdickungen flacher ausgebildet sind oder gänzlich fehlen, wodurch ebenfalls eine Schwenkbewegung der Fingertasche im Verhältnis zum Grundkörper erleichtert wird. Das Scharnier gibt durch seine Ausrichtung eine definierte Schwenkbewegung der Fingertasche vor, durch sich die Anfasshilfe bei der Handhabung durch einen Benutzer vorhersehbarer verhält und damit besser kontrollierbar ist und weniger Konzentration des Benutzers auf die Kontrolle der Anfasshilfe fordert, als das der Fall ohne ein Scharnier wäre. Das Scharnier kann insbesondere auch als ein lappenartiger Abschnitt aus einem flexiblen Material ausgebildet sein, der zumindest in einem eingeschränkten Umfang auch mehrdimensionale Bewegungen der Fingertasche zulässt. Der lappenartige Abschnitt verbindet über seine Länge und Breite die Fingertasche mit dem Grundkörper.

Nach einer Ausgestaltung der Erfindung ist das Scharnier als ein lappenartiger Abschnitt mit einer Länge ausgestaltet, die es erlaubt, die Fingertasche von unten und von der Seite her auf einen flachen heißen auf dem Grundkörper aufliegenden Gegenstand aufzulegen. Als flacher heißer Gegenstand kommen beispielsweise ein Backblech oder eine flache Auflaufschale in Betracht. Da mit Backwaren belegte Backbleche oder mit einer Speise befüllte Auflaufschalen häufig besonders schwer nur von der Seite her zu halten sind, ist es vorteilhaft, wenn die Fingertasche auch von oben auf den heißen Gegenstand auflegbar ist, so dass mit der auf den heißen Gegenstand aufgelegten Fingertasche der heiße Gegenstand auch von oben her mit einem oder mehreren Fingern fester und sicherer gehalten werden kann.

Nach einer Ausgestaltung der Erfindung ist die Fingertasche einstückig mit dem Grundkörper verbunden. Durch die feste Verbindung der Fingertasche mit dem Grundkörper ist die Fingertasche unverlierbar. Sie ist auch kostengünstig herstellbar, wenn der Grundkörper und die Fingertasche gemeinsam in einem ein- oder mehrstufigen Spritz- oder Gießvorgang aus einem Material hergestellt werden, das einen solchen Spritz- oder Gießvorgang ermöglicht.

Nach einer Ausgestaltung der Erfindung verfügt die Fingertasche über eine Einstecköffnung, einen Boden, der der Einstecköffnung gegenüberliegend ausgebildet ist, und eine Seitenwand, die den Innenraum der Fingertasche zur Seite hin begrenzt. Die Fingertasche ist so tief ausgestaltet, dass sie in die Fingertasche eingesteckte Finger vor der Hitze des heißen Gegenstands ausreichend schützt und die eingesteckten Finger nicht einfach wieder aus der Fingertasche hinausgleiten können. Dabei ist es vorteilhaft, wenn die Umhüllung eines oder mehrerer Finger auch so weit reicht, dass sich der eine oder die mehreren Finger nicht aus der Fingertasche lösen, wenn die Finger in einer Greifbewegung gekrümmt oder wieder gestreckt werden. Die Fingertasche folgt so den Bewegungen des oder der Finger, je nachdem, in welche Richtung sie bewegt werden. Dadurch ist sichergestellt, dass die Finger auch dann geschützt sind, wenn der Benutzer der Anfasshilfe den Griff lockert, beispielsweise um umzugreifen.

Nach einer Ausgestaltung der Erfindung ist die Fingertasche eigensteif ausgestaltet. Eigensteif bedeutet hier, dass die Fingertasche so stark ausgeführte Wandstärken aufweist, das die Fingertasche ihre Form zumindest annähernd beibehält, unabhängig davon, ob ein oder mehrere Finger in sie eingesteckt sind oder nicht. Insbesondere kann die Einstecköffnung für die Finger durch die eigensteife Ausbildung so weit offen bleiben, dass beim Gebrauch ein oder mehrere Finger leicht mit einer fließenden Bewegung in die Fingertasche eingeschoben werden können. Dann müssen dabei aufeinanderliegende Materiallagen nicht mehr voneinander gesondert abgehoben werden, um die Einstecköffnung zu öffnen. Die Fingertasche bietet so einen auch von der Form her gleich bleibenden sicheren Bereich, in den ein oder mehrere Finger einmal oder auch mehrmals hintereinander hineingesteckt werden können, ohne dass dabei das Risiko besteht, dass die Fingertasche ihre Form oder räumliche Lage verändert hat, man nicht mehr ohne Hinsehen einen oder mehrere Finger einstecken kann oder man mit den Fingerspitzen ertasten muss, wo sich denn die Einstecköffnung nun befindet, durch die man mit einem oder mehreren Fingern in die Fingertasche hineingleiten kann. Der Benutzer der Anfasshilfe kann nun voll darauf konzentrieren, den heißen Gegenstand zu erfassen und sicher zu halten, ohne dabei abgelenkt zu sein.

Nach einer Ausgestaltung der Erfindung enthält zumindest das die Fingertasche bildende Material der Anfasshilfe ein Polyorganosiloxan. Das Polyorganosiloxan ist auch unter der Bezeichnung Silikon bekannt. Hierbei handelt es sich insbesondere um Silikonkautschuke, die in einen gummielastischen Zustand überführbar sind und welche Polyorganosiloxane enthalten, die für Vernetzungsreaktionen zugängliche Gruppen aufweisen. Als solche kommen vorwiegend Wasserstoffatome, Hydroxygruppen und Vinylgruppen in Frage, die sich an den Kettenenden befinden, aber auch in die Kette eingebaut sein können. Silikonkautschuke enthalten verstärkende Stoffe und Füllstoffe, deren Art und Menge das mechanische und chemische Verhalten der durch die Vernetzung entstehenden Silikonelastomere deutlich beeinflussen. Silikonkautschuke können mit geeigneten Pigmenten gefärbt werden. Insbesondere heißvernetzende Silikonkautschuke sind plastisch verformbar und zwischen -40 und 250 °C wärmebeständig und elastisch. Sie können organische Peroxide für die Vernetzung enthalten. Die Silikonkautschuke sind bei der Handhabung der Fingertasche oder auch zusätzlich des Grundkörpers der Anfasshilfe auch bei einer Materialstärke von beispielsweise 3 - 10 mm noch flexibel verformbar, gleichwohl aber auch in den haushaltsüblich auftretenden Temperaturbereichen noch ausreichend form- und temperaturstabil, leicht, hygienisch und thermisch isolierend.

Nach einer Ausgestaltung der Erfindung erstreckt sich die Fingertasche über mehr als die halbe Breite des Grundkörpers. Dadurch ist die Fingertasche so groß, dass darin die Finger einer oder beider Hände in die Fingertasche eingesteckt werden können. Die Fingertasche ist bei einer solchen Größe für die Finger auch erreichbar, wenn der heiße Gegenstand mit den Händen von der Front und/oder der Seite her ergriffen und gehalten wird. Das gilt insbesondere dann, wenn sich die Fingertasche genau oder annähernd über die gesamte Breite des Grundkörpers erstreckt. Die Fingertasche kann sich auch über die Breite des Grundkörpers hinaus erstrecken, wenn ein heißer Gegenstand auch von der Seite her geschützt erfassbar sein soll oder der Grundkörper im Verhältnis zur Größe des heißen Gegenstands eine geringere Breite aufweist.

Nach einer Ausgestaltung der Erfindung weist der Grundkörper versteifende Elemente auf. Um die Abstützung des heißen Gegenstands bei der Handhabung zu verbessern, ist es vorteilhaft, den Grundkörper mit versteifenden Elementen zu versehen. Durch die versteifenden Elemente behält der Grundkörper bei der Benutzung der Anfasshilfe seine Form zumindest im Wesentlichen bei. Bei den versteifenden Elementen kann es sich um aussteifende Rippen, Wulste oder Leisten handeln, die aus dem Material des Grundkörpers selbst ausgeformt sind oder die als separate Bauteile aus einen steiferen Material in den Grundkörper eingebaut oder mit diesem nachträglich verbunden worden sind.

Nach einer Ausgestaltung der Erfindung stehen mehrere versteifende Elemente nach unten hin mehr als 1 cm weit von der flächigen Unterseite des Grundkörpers ab und begrenzen zwischen sich einen Hohlraum, in den ein oder mehrere Finger oder eine Hand von einer seitlichen Zugangsöffnung her hineinschiebbar ist. Wenn ein heißer Gegenstand auf der Anfasshilfe ruhend auf einer Fläche abgestellt ist, kann die Anfasshilfe mit dem darauf befindlichen heißen Gegenstand leichter von unten her angehoben werden, wenn die Anfasshilfe beim ersten Anheben nicht nur von der Seite her gepresst gehalten werden muss, sondern direkt von unten her angehoben werden kann. Dies wird ermöglicht, indem die versteifenden Elemente so weit über die flächige Unterseite des Grundkörpers nach unten hin hervorstehen, dass sich zwischen der Unterseite des Grundkörpers und der Lagerfläche, auf dem die Anfasshilfe aufsteht, ein Hohlraum ausbildet, der so hoch und breit ist, dass man in ihn vor dem Anheben der Anfasshilfe von einer Seite her einen oder mehrere Finger oder eine Hand hineinschieben kann. Dazu verfügt der Hohlraum über eine randseitige Zugangsöffnung, die sich nach einer Ausgestaltung der Erfindung auf der Seite der Anfasshilfe befindet, an der sich auch die Fingertasche angeordnet ist.

Nach einer Ausgestaltung der Erfindung ist die Fingertasche zwischen zwei unterschiedlichen Schwenklagen verlagerbar, wobei in einer ersten Schwenklage eine Seite der Fingertasche zusammen mit dem lappenartigen Abschnitt eine seitliche Verlängerung der Aufstellfläche des Grundkörpers bildet und die in einer Ebene unterhalb des lappenartigen Abschnitts befindliche Fingertasche den lappenartigen Abschnitt in dieser Schwenklage zur darunter befindlichen Unterlage hin abstützt und in der zweiten Schwenklage in einen Bereich oberhalb des Grundkörpers umgeschlagen ist, in der die Fingertasche den lappenartigen Abschnitt nach oben hin überragt. In der ersten Schwenklage vergrößert die Fingertasche also die Aufstellfläche des Grundkörpers. Sie ist zudem unter dem lappenartigen Abschnitt kaum sichtbar, so dass sie die Optik der Anfasshilfe nicht stört, wenn diese als Untersetzer benutzt wird. Andererseits ist die Fingertasche für die Finger gut zugänglich, wenn die Fingertasche in die zweite Schwenklage in einen Bereich oberhalb des Grundkörpers umgeschlagen worden ist. Dort können die Finger auch gut einen heißen Gegenstand erfassen, der sich unter der Fingertasche auf dem Grundkörper befindet. Der lappenartige Abschnitt bildet zusammen mit der Fingertasche und dem Grundkörper zusammen eine Art Klammer, die auch ein Halten und eine Führung eines heißen Gegenstands von der Seite her ermöglicht, ohne dass noch im seitlichen Bereich eine Verbrennung der Hand oder von Fingern drohen würde.

Nach einer Ausgestaltung der Erfindung befindet sich die Einstecköffnung in der Fingertasche auf der dem Scharnier zugewandten Seite der Fingertasche. Durch diese Ausgestaltung ist die Einstecköffnung in der ersten Schwenklage der Fingertasche nach innen hin gewandt, so dass in dieser Schwenklage der geschlossene Boden der Fingertasche nach außen hin gerichtet ist. Dadurch ergibt sich eine insgesamt geschlossene ruhige Optik des Bereichs unterhalb der Aufstellfläche. In der zweiten Schwenklage können die Finger leicht in die Fingertasche eingesteckt werden, weil die Einstecköffnung nun in Richtung des Randes hin weisend ausgerichtet ist, von wo aus die Hand die Anfasshilfe und den heißen Gegenstand umgreift.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen mit den Merkmalen des Anspruchs 1 oder aber in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:
- Fig. 1:: eine Ansicht von schräg oben auf eine Anfasshilfe,
- Fig. 2:: eine Ansicht auf die in Fig. 1 gezeigte Anfasshilfe mit der nach oben umgeschlagenen Fingertasche,
- Fig. 3:: die in den Fig. 1 und 2 gezeigte Anfasshilfe mit einem auf den Grundkörper aufgestellten heißen Gegenstand, und
- Fig. 4:: die in Fig. 2 dargestellte Anfasshilfe aus einer Ansicht von unten.

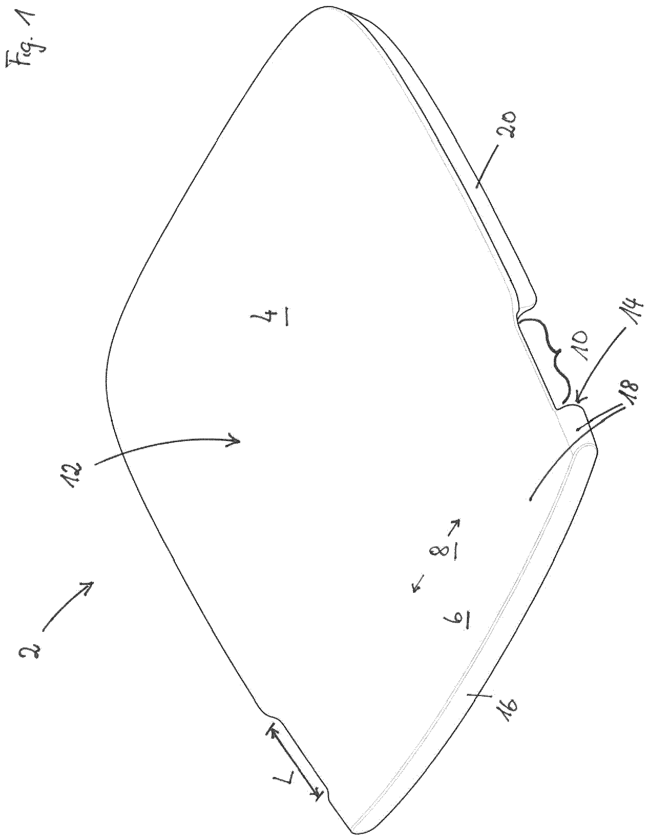

In Fig. 1 ist eine Ansicht von schräg oben auf eine Anfasshilfe 2 gezeigt. Die Anfasshilfe 2 besteht im Wesentlichen aus einem Grundkörper 4, einer Fingertasche 6 und einem Scharnier 8, das im Ausführungsbeispiel als lappenartiger Abschnitt 10 ausgebildet ist. Der lappenartige Abschnitt 10 verfügt über eine Länge L. Auf seiner Oberseite verfügt die Anfasshilfe 2 über eine Aufstellfläche 12, auf der ein heißer Gegenstand abgestellt werden kann. Der lappenartige Abschnitt 10 sowie eine Seite der Fingertasche 6 verlängern die Aufstellfläche 12 über die Grundfläche des Grundkörpers 4 hinaus.

In der in Fig. 1 gezeigten ersten Schwenklage befindet sich die Fingertasche 6 unterhalb der Ebene der Aufstellfläche 12. Der lappenartige Abschnitt 10 wird in dieser Schwenklage nach unten hin von der Fingertasche 6 abgestützt, so dass sich eine annähernd waagerechte Fortsetzung der Aufstellfläche 12 im Bereich des Grundkörpers 4 zur Seite hin ergibt.

In der in Fig. 1 gezeigten ersten Schwenklage der Fingertasche 6 weist der Boden 16 der Fingertasche 6 nach außen. Die Seitenwand 18 des Innenraums der Fingertasche 6 ist geschlossen ausgebildet. Die Einstecköffnung 14, durch die Finger in den Innenraum der Fingertasche 6 eingesteckt werden können, befindet sich in der in Fig. 1 gezeigten ersten Schwenklage auf der nach innen weisenden Seite der Fingertasche 6.

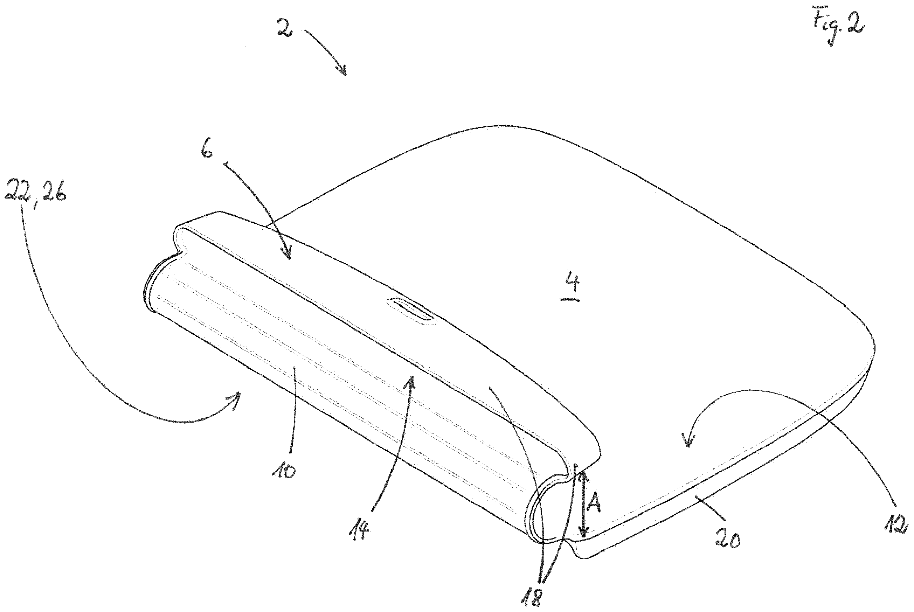

In Fig. 2 ist die Anfasshilfe 2 mit einer nach oben umgeschlagenen Fingertasche 6 gezeigt. In dieser zweiten Schwenklage weist die Einstecköffnung 14 nach außen. Der lappenartige Abschnitt 10 ist in der zweiten Schwenklage in einem Bogen von ca. 180° aufgebogen. Dadurch befindet sich die Fingertasche 6 in einem Abstand A oberhalb der Aufstellfläche 12 des Grundkörpers 4. Durch die Flexibilität des lappenartigen Abschnitts 10 kann die Fingertasche 6 auch höher oder tiefer über der Aufstellfläche 12 gehalten werden, oder die Fingertasche 6 wird weiter in einen Bereich über den Grundkörper 4 nach innen hin gehalten.

In der Ansicht in den Figuren 1, 2 ist erkennbar, dass sich an der Unterseite des Grundkörpers 4 versteifende Elemente 20 befinden. Im Ausführungsbeispiel sind die versteifenden Elemente 20 als längliche Rippen ausgebildet, die nach unten hin über die nach unten weisende Fläche des Grundkörpers 4 hervorstehen. Dadurch ist es möglich, beispielsweise vier Finger einer Hand in den Hohlraum 22 unterhalb des Grundkörpers 4 zu schieben, ohne dass dafür schon der Grundkörper 4 angehoben werden muss, und den Daumen in die Fingertasche 6 einzulegen, um einen heißen Gegenstand 24, der sich zwischen der Fingertasche 6 und der Aufstellfläche 12 auf dem Grundkörper 4 befindet, zwischen Daumen und übrigen Fingern geklemmt zu halten.

Die Zugangsöffnung zum Hohlraum 22 befindet sich im Ausführungsbeispiel unterhalb des Abschnitts 10.

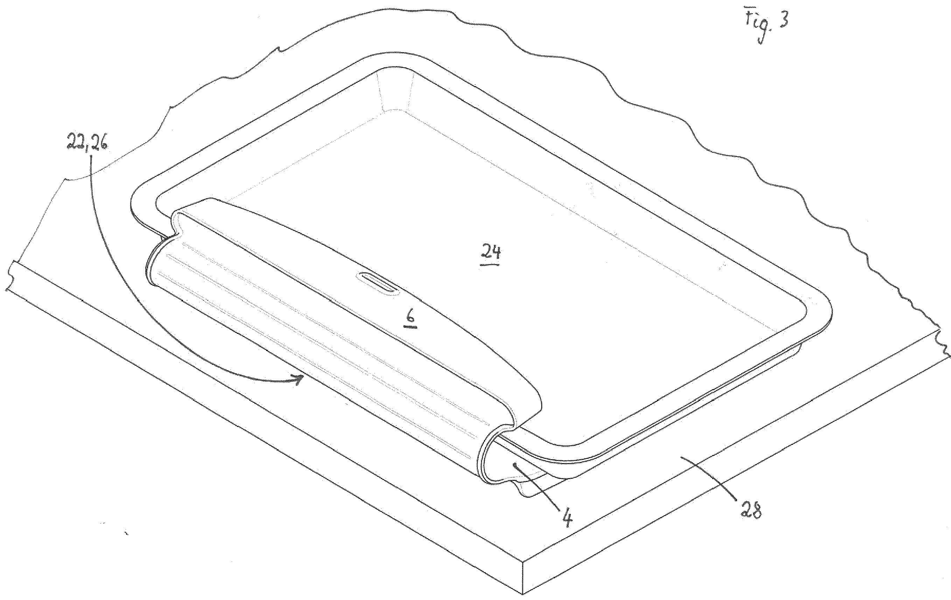

In Fig. 3 ist gezeigt, wie ein heißer Gegenstand 24 wie beispielsweise ein Backblech auf den Grundkörper 4 aufgestellt ist. Der Grundkörper 4 ist wiederum auf eine Tischplatte als Unterlage 28 aufgestellt. Die Fingertasche 6 befindet sich in der zweiten Schwenklage, in der die Fingertasche 6 von oben auf den Gegenstand 24 aufgelegt ist. Die in die Fingertasche 6 eingelegten Finger können die Fingertasche 6 von oben auf den Gegenstand 24 hinabdrücken. Einen Gegendruck können die Finger erzeugen, die durch die Zugangsöffnung 26 in den Hohlraum 22 eingelegt sind, der sich zwischen der Unterlage 28 und der flächigen Unterseite des Grundkörpers 4 befindet.

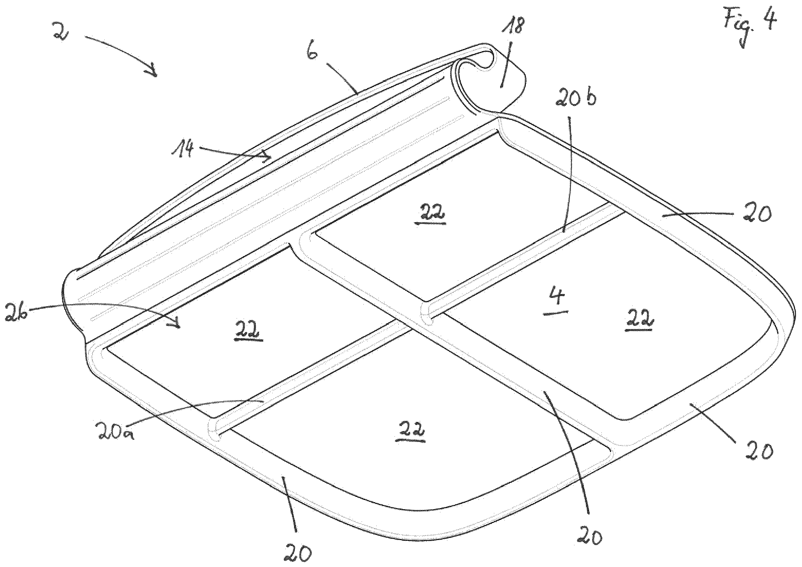

In Fig. 4 ist die Anfasshilfe 2 aus einer Ansicht von schräg unten gezeigt. Aus der Ansicht von schräg unten sind die versteifenden Elemente 20 gut erkennbar. Die versteifenden Elemente 20 sind an drei Seiten außen umlaufend ausgebildet, im Bereich der Zugangsöffnung 26 jedoch nicht bzw. nur verkürzt. Es sind jedoch noch zwei weitere versteifende Elemente 20a, 20b vorgesehen, die sich in Quer- und Längsrichtung mittig unterhalb der Aufstellfläche 12 an der Unterseite des Grundkörpers 4 befinden. In der Fläche wird die Aufstellfläche 12 des Grundkörpers 4 dadurch versteift.

Aus den Figuren 1 bis 4 ist ersichtlich, dass Finger, die in die Fingertasche 6 eingesteckt sind, nicht so leicht zur Seite aus der Fingertasche herausrutschen können, weil sie von den Seitenwänden 18 in seitlicher Richtung abgestützt sind. Im Ausführungsbeispiel ist ein Scharnier 8 gezeigt, das aus einem lappenartigen Abschnitt 10 gebildet ist. Anstelle eines solchen lappenartigen Abschnittes kann auch ein echtes Scharnier 8 verwendet sein, das die Fingertasche 6 mit dem Grundkörper 4 verbindet, oder es ist ein starrer koppelartiger Gelenkkörper verwendet, der über zwei Schwenkachsen an einer Seite mit dem Grundkörper 4 und einer anderen Seite mit der Fingertasche 6 verbunden ist. Andere ein- oder mehrgliedrige gelenkartige Konstruktionen sind auch möglich.

Im Ausführungsbeispiel ist die Fingertasche 6, der Grundkörper 4 und der lappenartige Abschnitt 10 als ein einstückiger Körper ausgebildet, der in einem Spritzgießvorgang aus einem Silikon herstellbar ist. Die Anfasshilfe 2 kann allerdings auch aus mehreren Teilen zusammengesetzt sein.

Bei einer eigensteifen Ausgestaltung der Fingertasche 6 behält die Fingertasche 6 unabhängig von Ihrer Schwenklage und unabhängig von dem Umstand, ob ein oder mehrere Finger in die Fingertasche 6 eingesteckt sind, ihre Raumform im Wesentlichen unverändert bei. Dadurch bleibt die Einstecköffnung 14 unabhängig von der Schwenklage der Fingertasche 6 immer so groß, dass Finger leicht in die Fingertasche 6 eingesteckt werden können.

Aus den Figuren 1 bis 4 ist auch ersichtlich, dass sich die Fingertasche 6 im Ausführungsbeispiel über die Breite des Grundkörpers 4 hinweg erstreckt. Hiervon abweichend kann die Fingertasche 6 auch schmaler oder breiter als die Breite der Grundkörpers 4 ausgeführt werden. Es ist auch möglich, die Fingertasche zu teilen, wobei auch die zusammengesetzten Teile der Fingertaschen mehr als die halbe Breite des Grundkörpers einnehmen können.

Die in den Figuren 1 bis 4 erkennbaren versteifenden Elemente können als Rippen, Wulste oder Leisten ausgebildet sein, wobei diese einstückig mit dem Grundkörper 4 ausgebildet oder nachträglich an diesen angebaut sein können. Es können auch Formkörperelemente sein, die beim Gießprozess des Grundkörpers 4 in die Werkzeugform eingelegt und während des Gießvorgangs vom Silikonkautschuk umgossen werden. Hier sind verschiedene Herstellungswege möglich.

Die Erfindung ist nicht auf das vorstehende Ausführungsbeispiel beschränkt. Dem Fachmann bereitet es keine Schwierigkeiten, die Ausführungsbeispiele auf eine ihm geeignet erscheinende Weise abzuwandeln, um sie an einen konkreten Anwendungsfall anzupassen.

## Patentansprüche

1. Anfasshilfe (2) zur Handhabung eines heißen Gegenstands (24) mit einem eine Aufstellfläche (12) aufweisenden flächigen Grundkörper (4), **dadurch gekennzeichnet, dass** an dem Grundkörper (4) randseitig eine Fingertasche (6) aus einem flexiblen Material ausgebildet ist, die einen oder mehrere eingesteckte Finger zumindest bereichsweise umhüllt, wenn dieser oder diese in die Fingertasche (6) eingesteckt sind.

2. Anfasshilfe (2) nach Anspruch 1, **dadurch gekennzeichnet, dass** die Fingertasche (6) mit dem Grundkörper (4) über ein Scharnier (8) verbunden ist, durch das sich eine definierte Schwenkbewegung der Fingertasche (6) im Verhältnis zum Grundkörper (4) einstellt.

3. Anfasshilfe (2) nach Anspruch 2, **dadurch gekennzeichnet, dass** das Scharnier (8) als ein lappenartiger Abschnitt (10) mit einer Länge (L) ausgestaltet ist, die es erlaubt, die Fingertasche (6) umzuschlagen und dabei von unten und von der Seite her auf einen flachen heißen auf dem Grundkörper (4) aufliegenden Gegenstand (24) aufzulegen.

4. Anfasshilfe (2) nach einem der vorhergehenden Ansprüche, **dadurch gekennzeichnet, dass** die Fingertasche (6) einstückig mit dem Grundkörper (4) verbunden ist.

5. Anfasshilfe (2) nach einem der vorhergehenden Ansprüche, **dadurch gekennzeichnet, dass** die Fingertasche (6) über eine Einstecköffnung (14), einen Boden (16), der der Einstecköffnung (14) gegenüberliegend ausgebildet ist, und eine Seitenwand (18) verfügt, die den Innenraum der Fingertasche (6) zur Seite hin begrenzt.

6. Anfasshilfe (2) nach einem der vorhergehenden Ansprüche, **dadurch gekennzeichnet, dass** die Fingertasche (6) eigensteif ausgestaltet ist.

7. Anfasshilfe (2) nach einem der vorhergehenden Ansprüche, **dadurch gekennzeichnet, dass** zumindest das die Fingertasche (6) bildende Material der Anfasshilfe (2) ein Polyorganosiloxan enthält.

8. Anfasshilfe (2) nach einem der vorhergehenden Ansprüche, **dadurch gekennzeichnet, dass** sich die Fingertasche (6) über mehr als die halbe Breite des Grundkörpers (4) erstreckt.

9. Anfasshilfe (2) nach einem der vorhergehenden Ansprüche, **dadurch gekennzeichnet, dass** der Grundkörper (4) versteifende Elemente (20) aufweist.

10. Anfasshilfe (2) nach Anspruch 9, **dadurch gekennzeichnet, dass** mehrere versteifende Elemente (20) nach unten hin mehr als 1 cm weit von der flächigen Unterseite des Grundkörpers (4) abstehen und zwischen sich einen Hohlraum (22) begrenzen, in den ein oder mehrere Finger oder eine Hand von einer seitlichen Zugangsöffnung (26) her hineinschiebbar ist.

11. Anfasshilfe (2) nach einem der vorhergehenden Ansprüche, **dadurch gekennzeichnet, dass** die Fingertasche (6) zwischen zwei unterschiedlichen Schwenklagen verlagerbar ist, wobei in einer ersten Schwenklage eine Seite der Fingertasche (6) zusammen mit dem lappenartigen Abschnitt (10) eine seitliche Verlängerung der Aufstellfläche (12) des Grundkörpers (4) bildet und die in einer Ebene unterhalb des lappenartigen Abschnitts (10) befindliche Fingertasche (6) den lappenartigen Abschnitt (10) in dieser Schwenklage zur darunter befindlichen Unterlage (28) hin abstützt und in der zweiten Schwenklage in einen Bereich oberhalb des Grundkörpers (4) umgeschlagen ist, in der die Fingertasche (6) den lappenartigen Abschnitt (10) nach oben hin überragt.

12. Anfasshilfe (2) nach einem der vorhergehenden Ansprüche, **dadurch gekennzeichnet, dass** sich die Einstecköffnung (14) in der Fingertasche (6) auf der dem Scharnier (8) zugewandten Seite der Fingertasche (6) befindet.
